# FASCICULE DE BREVET EUROPEEN

(11) **EP 1 518 143 B1**
(45) Date de publication et mention de la délivrance du brevet: **21.12.2005**
(21) Numéro de dépôt: 03760631.6
(22) Date de dépôt: 17.06.2003
(51) Int. Cl.: G02F 1/13, G02F 1/1345, H01L 21/00

(54) **MOYENS DE CONNEXION DESTINES A ETABLIR UNE LIAISON ELECTRIQUE ENTRE UNE CELLULE, NOTAMMENT A CRISTAUX LIQUIDES, ET UN CIRCUIT D'ALIMENTATION OU DE COMMANDE**
VERBINDUNGSMITTEL ZUM EINRICHTEN EINER ELEKTRISCHEN VERBINDUNG ZWISCHEN EINER ZELLE, INSBESONDERE EINER FLÜSSIGKRISTALLZELLE, UND EINER STROMVERSORGUNGS- ODER STEUERSCHALTUNG
CONNECTION MEANS FOR SETTING UP AN ELECTRIC CONNECTION BETWEEN A CELL, IN PARTICULAR A LIQUID CRYSTAL CELL, AND A POWER OR CONTROL CIRCUIT

(30) Priorité: 21.06.2002 EP 02077491
(43) Date de publication de la demande: 30.03.2005
(73) Titulaire: ASULAB S.A., 2074 Marin (CH)
(72) Inventeur: REY-MERMET, Gilles, CH-2525 Le Landeron (CH); KLAPPERT, Rolf, CH-2000 Neuchâtel (CH)
(74) Mandataire: Thérond, Gérard Raymond
(86) Numéro de dépôt international: PCT/EP2003/006375
(87) Numéro de publication internationale: WO 2004/001490

(56) Documents cités:
- EP-A- 0 708 931
- US-A- 4 643 526
- US-A1- 2001 050 748
- PATENT ABSTRACTS OF JAPAN vol. 015, no. 309 (P-1235), 7 août 1991 (1991-08-07) -& JP 03 110518 A (STANLEY ELECTRIC CO LTD), 10 mai 1991 (1991-05-10)
- PATENT ABSTRACTS OF JAPAN vol. 1999, no. 04, 30 avril 1999 (1999-04-30) -& JP 11 002822 A (SHARP CORP), 6 janvier 1999 (1999-01-06)

## Description

La présente invention concerne des moyens de connexion destinés à établir une liaison électrique entre une cellule électro-optique telle qu'une cellule à cristaux liquides ou une cellule photovoltaïque électrochimique et un circuit électronique extérieur d'alimentation ou de commande. L'invention concerne un procédé pour la fabrication de telles cellules.

Une première catégorie connue de cellules photovoltaïques convertit la lumière en électricité en exploitant l'effet photovoltaïque qui apparaît à la jonction de matériaux semi-conducteurs. Le matériau semi-conducteur remplit en même temps les fonctions d'absorption de la lumière et de séparation des charges électriques résultantes (électrons et trous). Le matériau doit être de grande pureté, exempt de défaut, faute de quoi électrons et trous se recombinent avant d'avoir pu être séparés. Le prix de revient de telles cellules est donc passablement élevé.

La présente invention vise un procédé de fabrication d'un second type de cellules photovoltaïques dites électrochimiques qui comprennent un matériau semi-conducteur qui est normalement insensible à la lumière visible en raison de la largeur de sa bande interdite, et qui ne commence à absorber que dans le proche ultraviolet. Un tel matériau peut néanmoins être sensibilisé par l'adsorption d'un colorant tel qu'un complexe d'un métal de transition qui permet un taux de conversion entre un photon incident et un électron approchant l'unité. Après avoir été excité par l'absorption d'un photon, le colorant peut transférer un électron dans la bande de conduction du matériau semi-conducteur. Le champ électrique régnant au sein du matériau semi-conducteur permet l'extraction de cet électron. Après transfert de l'électron, le colorant retourne à l'état fondamental oxydé. La recombinaison entre l'électron dans la bande de conduction du matériau semi-conducteur et le trou sur le colorant oxydé est beaucoup plus lente que la réduction du colorant oxydé par un médiateur. De ce fait, la séparation de charge est efficace.

Les cellules du genre décrit ci-dessus comprennent généralement un premier substrat avant transparent et un second substrat arrière qui peut être également transparent ou non. Ces deux substrats comportent chacun sur leurs faces en regard une première électrode encore appelée contre-électrode, et une seconde électrode habituellement connue sous le nom de photo-électrode. Ces électrodes sont destinées à être reliées à un circuit d'alimentation électrique et sont classiquement réalisées sous la forme d'une couche mince d'un oxyde conducteur transparent tel qu'un mélange d'oxyde d'indium/étain ou d'oxyde d'étain/antimoine.

Les deux substrats sont réunis entre eux par un cadre de scellement qui s'étend le long du pourtour de ceux-ci. Ce cadre de scellement définit un volume étanche pour le confinement du matériau semi-conducteur déposé en couche sur l'un des substrats et d'un électrolyte contenant le médiateur susmentionné.

La présente invention vise également un procédé de fabrication de cellules d'affichage dites électro-optiques, en particulier à cristaux liquides, qui, de manière analogue aux cellules photovoltaïques électrochimiques, comprennent :
- au moins un premier substrat avant transparent dont la surface supérieure constitue la face avant de la cellule;
- au moins un second substrat arrière qui peut être également transparent ou non, dont la surface inférieure constitue la face arrière de ladite cellule;
- les substrats comportant chacun sur leurs faces en regard au moins une électrode, ces électrodes étant destinées à être reliées à un circuit de commande de l'affichage qui, par application de tensions électriques appropriées à des électrodes sélectionnées, est en mesure de modifier les caractéristiques de transmission ou de réflexion d'un milieu optiquement actif;
- les substrats étant réunis par un cadre de scellement délimitant un volume étanche pour le confinement du milieu optiquement actif, et
- des moyens de connexion pour établir la liaison électrique entre chaque électrode et le circuit de commande de l'affichage.

Un problème constant dans le domaine des cellules photovoltaïques électrochimiques du genre décrit ci-dessus est posé par les moyens de connexion qui sont utilisés pour établir la liaison électrique entre les électrodes de la cellule et un circuit électrique d'alimentation. On rencontre également ce problème avec les cellules d'affichage électro-optiques où les électrodes de la cellule doivent être reliées au dispositif générateur de signaux électriques de commande qui viennent modifier les caractéristiques optiques de la matière sensible confinée entre les substrats de la cellule.

En effet, la technique la plus fréquemment employée pour réaliser les plages de connexion qui permettent de relier les électrodes de telles cellules à un circuit électronique d'alimentation ou de commande, consiste à faire déboucher ces plages de connexion le long d'au moins un bord de la cellule où le substrat qui porte les électrodes fait saillie par rapport à l'autre substrat. Cette solution conduit donc à devoir décaler les substrats de la cellule l'un par rapport à l'autre, ceci afin de pouvoir accéder aux électrodes et réaliser les connexions électriques. Or, un tel agencement rend difficile la fabrication des cellules en série, notamment lorsque celles-ci sont circulaires, et nécessite des opérations supplémentaires de rayage et de cassure du verre coûteuses en temps.

Pour remédier à ces problèmes, une première solution a été apportée par la Demanderesse dans sa demande de brevet EP A1-0 936 496. Cette demande de brevet européen décrit une cellule photovoltaïque électrochimique dans laquelle chacun des deux substrats de la cellule porte sur la majeure partie de sa surface une électrode transparente. Des plots de contact, réalisés en une matière électriquement conductrice, sont apportés sur chaque électrode dans la zone de contact latérale où celle-ci affleure la tranche du substrat sur lequel elle a été déposée.

Grâce aux caractéristiques de l'invention brièvement décrite ci-dessus, il est possible d'augmenter la surface de la zone latérale de contact électrique par laquelle chaque électrode de la cellule est reliée au circuit électrique d'alimentation ou de commande. La liaison électrique entre les électrodes et le circuit électrique d'alimentation ou de commande est ainsi beaucoup plus fiable.

Par contre, le dépôt du cadre de scellement s'effectue par sérigraphie, technique qui consiste, rappelons-le, à déposer un matériau à consistance pâteuse à travers les mailles non obturées d'un écran, par exemple en nylon ou en acier inoxydable, à mailles très fines à l'aide d'une raclette actionnée à la main ou mécaniquement. Or, deux inconvénients majeurs pèsent sur les techniques de dépôt par sérigraphie des cadres de scellement. Le premier de ces inconvénients réside dans le fait qu'il est difficile de contrôler avec précision les dimensions finales de ces cadres. En effet, lorsqu'on applique le substrat supérieur sur le substrat inférieur, la matière de scellement s'écrase et a tendance à s'étaler sous l'effet de la pression exercée, de sorte que la largeur du cadre de scellement ne peut être contrôlée qu'avec une précision qui est typiquement de l'ordre du dixième de millimètre. Par ailleurs, la paroi intérieure des cadres de scellement déposés par sérigraphie qui est en contact avec le cristal liquide présente habituellement des irrégularités de forme, de sorte qu'il faut ménager ces cadres à une distance suffisante des électrodes afin qu'ils n'empiètent pas sur ces dernières. Une telle situation peut être acceptable si l'on dispose d'un espace suffisant entre les bords de la cellule d'où émergent les connexions et la zone active proprement dite de cette cellule. Par contre, dès que l'on cherche à réduire les dimensions de la zone morte réservée à la connectique afin d'optimiser la surface de la zone d'affichage de la cellule ou pour répondre à des problèmes d'encombrement, la précision offerte par les techniques de sérigraphie n'est plus suffisante.

L'autre inconvénient des techniques de dépôt par sérigraphie réside dans le fait que la mise en oeuvre de ces techniques engendre des contraintes mécaniques non négligeables qui sont souvent préjudiciables aux structures avoisinantes déjà déposées au moment où intervient l'étape de sérigraphie. Pour préserver ces structures fragiles, il est préférable de les déposer après le dépôt du cadre de scellement. Tel est le cas dans la demande de brevet EP-A1-0 936 496 où les plots de contact sont déposés sur les électrodes correspondantes au moyen d'un distributeur du type seringue mieux connu sous sa dénomination anglo-saxonne "dispenser". Mais une telle technique est peu précise et limite considérablement le nombre de plots de contact qu'il est possible de réaliser sur une même cellule, ce qui réserve l'emploi de cette technique à des cellules ayant une faible densité de connexions.

On connaît également par le brevet européen EP-B1-0 708 931 au nom de la société sud-coréenne Samsung Electronics Co. Ltd. une cellule d'affichage à cristaux liquides à joint mince ainsi qu'un procédé de fabrication d'une telle cellule. Conformément à ce procédé, un cordon de matière de scellement est déposé sur le pourtour d'un premier substrat dont les dimensions sont plus grandes que celles de la cellule d'affichage à cristaux liquides recherchée. Un second substrat de mêmes dimensions que le premier substrat est ensuite déposé sur ledit premier substrat de manière à créer une cavité délimitée par les premier et second substrats et le cordon de matière de scellement. Après quoi, la matière de scellement est solidifiée de manière à réunir les deux substrats, puis la cavité est remplie avec le cristal liquide via une ouverture de remplissage qui est ensuite obturée. Finalement, l'ensemble des deux substrats est scié à travers le cordon de matière de scellement pour le ramener aux dimensions de la cellule d'affichage voulue.

Dans le brevet Samsung, le cordon de matière de scellement est déposé à l'aide d'une seringue. Il faut donc que les plots de contact soient sensiblement moins hauts que l'espace séparant les deux substrats de la cellule car, si tel n'est pas le cas, on risque d'observer des surépaisseurs aux endroits où la matière de scellement recouvre lesdits plots de contact, surépaisseurs qui sont inacceptables dans la mesure où elles entraînent des défauts de parallélisme entre les deux substrats et rendent la cellule non étanche. En outre, comme les plots de contact sont peu hauts, il faut qu'ils soient larges afin d'offrir une surface de contact électrique suffisante, ce qui limite considérablement le nombre d'électrodes qu'il est possible de connecter et donc la résolution de l'afficheur ainsi obtenu.

La demande de brevet US 2001/050748 décrit un procédé de fabrication d'une cellule d'affichage comprenant deux substats réunis par un cadre de scellement composé d'une cloison entourée d'une matière de scellement.

La présente invention a pour but de remédier aux inconvénients de l'art antérieur susmentionnés ainsi qu'à d'autres encore en procurant un procédé de fabrication d'une cellule électro-optique, en particulier une cellule d'affichage à cristaux liquides, ou une cellule photovoltaïque électrochimique comprenant des moyens de connexion destinés à établir une liaison électrique fiable et peu encombrante entre les électrodes de la cellule et un circuit électrique d'alimentation ou de commande.

La présente invention a également pour objet un procédé de fabrication d'une cellule du genre susmentionné qui soit facile à mettre en oeuvre et qui limite surtout les risques de détériorer des éléments de la cellule déjà déposés.

A cet effet, la présente invention concerne un procédé de fabrication d'une cellule électro-optique, en particulier une cellule d'affichage à cristaux liquides, ou une cellule photovoltaïque électrochimique comprenant ;
- au moins un premier substrat avant transparent dont la surface supérieure constitue la face avant de la cellule;
- au moins un second substrat arrière qui peut être également transparent ou non et dont la surface inférieure constitue la face arrière de ladite cellule;
- les substrats étant réunis par un cadre de scellement qui définit un volume pour le confinement d'une matière sensible dont les propriétés physiques, notamment optiques, ou électriques sont susceptibles de changer;
- les substrats comportant chacun sur leurs faces en regard au moins une électrode, ces électrodes étant destinées à être reliées à un circuit électrique d'alimentation ou de commande;
- les électrodes de la cellule se prolongeant sensiblement jusqu'aux bords de la cellule pour constituer des moyens de connexion afin d'établir la liaison électrique entre ladite cellule et le circuit d'alimentation ou de commande,
en outre le cadre de scellement comprend au moins une cloison structurée sur l'un des deux substrats et qui délimite par sa face latérale interne le volume pour le confinement de la matière sensible, cette cloison s'étendant en retrait par rapport aux bords de la cellule, de façon à dégager les contacts de connexion, et étant donc traversée par les électrodes, les substrats étant réunis par un joint de scellement qui occupe au moins en partie l'interstice délimité par lesdits substrats et la face latérale externe de la cloison. Les moyens de connexion électrique comprennent éventuellement des plots de contact réalisés en une matière électriquement conductrice apportée sur le prolongement de chaque electrode à l'endroit où celle-ci émerge de la cloison.

Grâce à ces caractéristiques, il est possible d'augmenter la surface de la zone latérale de contact électrique par laquelle chaque électrode de la cellule est reliée au circuit électrique d'alimentation ou de commande. La liaison électrique entre les électrodes et le circuit d'alimentation ou de commande est ainsi beaucoup plus fiable. D'autre part, le fait que le cadre de scellement soit formé de deux parties, à savoir une cloison qui délimite un volume pour le confinement de la matière sensible, et un cordon de matière de scellement que l'on vient déposer contre la face externe de la cloison et qui comble l'interstice laissé vacant entre les deux substrats du fait que ladite cloison est structurée légèrement en retrait par rapport aux bords de la cellule, permet de réduire sensiblement les dimensions de la zone morte réservée à la connectique de la cellule et donc d'optimiser la surface de la zone d'affichage de ladite cellule ou de réduire son encombrement. Enfin, la matière de scellement vient enrober les plots de contact, ce qui permet d'éviter tout risque de détériorer ces plots.

La présente invention concerne un procédé de fabrication d'au moins une cellule du type susmentionné, ce procédé étant caractérisé en ce qu'il comprend les étapes consistant à :
- structurer sur chacun des substrats les électrodes correspondantes;
- déposer éventuellement sur chaque électrode, dans la région où ces électrodes affleurent les bords de la cellule, un plot de contact réalisé en une matière électriquement conductrice;
- structurer sur l'un des substrats au moins une cloison qui délimite par sa face latérale interne le volume pour le confinement de la matière sensible;
- réunir le second substrat avec le premier substrat;
- introduire une matière de scellement susceptible de s'écouler dans l'interstice délimité par lesdits substrats et la face latérale externe de la cloison jusqu'à ce qu'au moins une partie de cet interstice soit occupée par la matière de scellement, et
- solidifier la matière de scellement afin que celle-ci forme le cadre de scellement de la cellule ainsi obtenue.

D'autres caractéristiques et avantages de la présente invention ressortiront plus clairement de la description détaillée qui suit d'un exemple de réalisation de la cellule conforme à l'invention, cet exemple étant donné à titre purement illustratif et non limitatif seulement, en liaison avec le dessin annexé sur lequel :
- la figure 1 est une vue de dessus d'une cellule sur laquelle est notamment représenté le canal de remplissage destiné à recevoir une matière de scellement fluide pour former le cadre de scellement de cette cellule et le trou d'amenée correspondant de la matière de scellement;
- la figure 2 est une vue en perspective de la cellule représentée à la figure 1, le substrat de verre supérieur ayant été omis pour des raisons de clarté;
- la figure 3 est une vue en perspective avec arrachement partiel du substrat supérieur montrant le volume délimité par les deux substrats superposés et la face externe d'une cloison réalisée conformément au procédé selon l'invention;

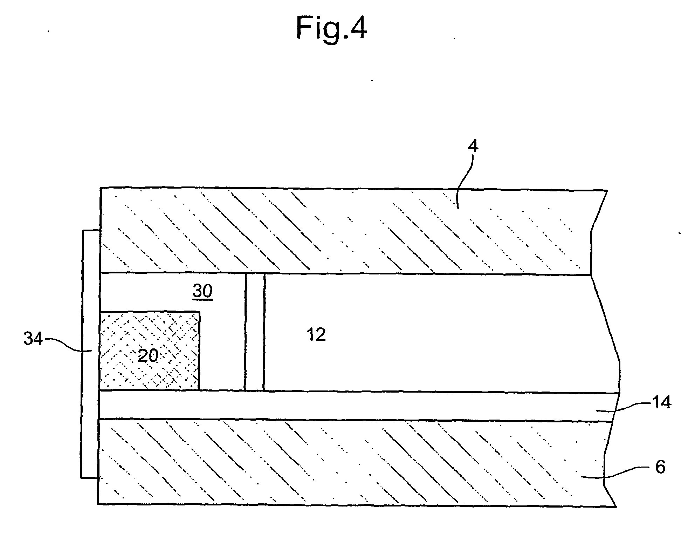

- la figure 4 est une vue en coupe de la cellule représentée à la figure 3, et
- la figure 5 est une représentation schématique d'un lot de cellules.

La présente invention procède de l'idée générale inventive qui consiste à réaliser le cadre de scellement d'une cellule, par exemple à cristaux liquides, en deux parties, à savoir une cloison qui peut être réalisée avec une grande précision à proximité des bords de la cellule et qui délimite par sa face latérale interne un volume pour le confinement d'une matière sensible telle qu'un cristal liquide, et un joint de scellement qui est introduit dans l'interstice entre les deux substrats et qui confère au cadre de scellement résultant sa résistance mécanique et son pouvoir d'adhésion desdits deux substrats. Il est ainsi possible de réduire l'espace nécessaire pour faire déboucher les électrodes de la cellule, de sorte que l'on procure une cellule plus compacte ou offrant une surface active plus grande. En effet, comme il était jusqu'à présent difficile de déposer le cadre de scellement avec précision, il fallait disposer celui-ci suffisamment loin des bords de la cellule afin d'être certain que les électrodes émergeraient bien dudit cadre de scellement, ce qui conduisait à une réduction sensible de la surface active de ladite cellule. En outre, comme la matière de scellement vient enrober les plots conducteurs ménagés en bout des pistes conductrices, on évite tout risque de détériorer ces moyens de connexion.

La présente invention va être décrite en liaison avec une cellule d'affichage à cristaux liquides. Il va de soi que cet exemple est donné à titre purement illustratif seulement, et que la présente invention s'applique de manière analogue à tout type de cellule électro-optique ou photovoltaïque électrochimique.

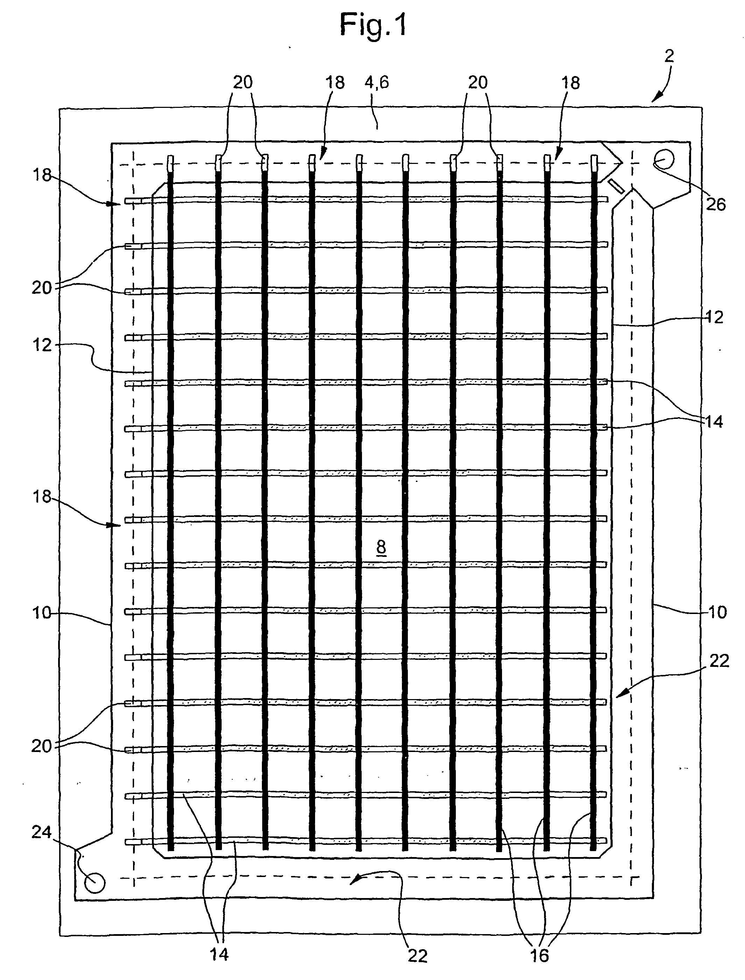

La figure 1 est une vue en plan d'une cellule à cristaux liquides 2 en cours de fabrication, cette cellule étant formée par un ensemble de deux substrats superposés 4 et 6, par exemple des substrats de verre, dont le substrat avant 4 est transparent, tandis que le substrat arrière 6 peut également être transparent ou non.

On voit sur la figure 1 que la cellule 2 définit une cavité 8 destinée à renfermer les cristaux liquides, cette cavité 8 étant délimitée par les substrats 4 et 6 et par des cloisons étanches 10 et 12 destinées à recevoir une matière de scellement qui fixe lesdits substrats 4 et 6 l'un à l'autre comme cela sera décrit plus en détail ci-dessous. Les substrats avant 4 et arrière 6 portent également une multiplicité d'électrodes 14 et de contre-électrodes 16 respectivement. Comme on peut le voir sur la figure 1, ces électrodes 14 et ces contre-électrodes 16 sont sensiblement rectilignes et s'étendent perpendiculairement les unes par rapport aux autres. Ces électrodes 14 et 16, représentées de façon exagérément mince afin de rendre le dessin plus compréhensible, sont destinées à être reliées à un circuit électronique de commande (non représenté) qui, par application de tensions électriques appropriées à des électrodes sélectionnées, est en mesure de modifier les caractéristiques de transmission ou de réflexion de la lumière du composé formé par le cristal liquide au point de croisement des électrodes considérées. Bien entendu, la forme et le nombre des électrodes représentées au dessin sont donnés à titre purement illustratif, de nombreux autres arrangements de ces électrodes pouvant, bien sûr, être envisagés.

Les électrodes 14 et 16 de la cellule 2 se prolongent jusqu'au voisinage des bords des substrats 4 et 6 sur lesquels elles sont déposées pour constituer des moyens de connexion 18 afin d'établir la liaison électrique entre ladite cellule 2 et le circuit de commande. Par contre, la cloison 12 s'étend en retrait par rapport aux bords de la cellule, de façon à dégager les moyens de connexion 18, et est donc traversée par les électrodes 14 et 16.

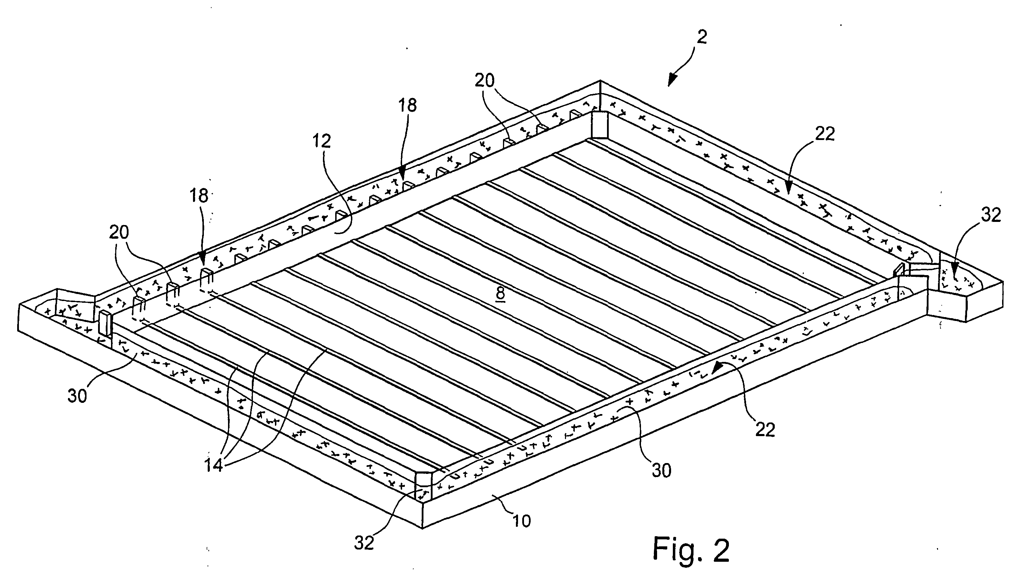

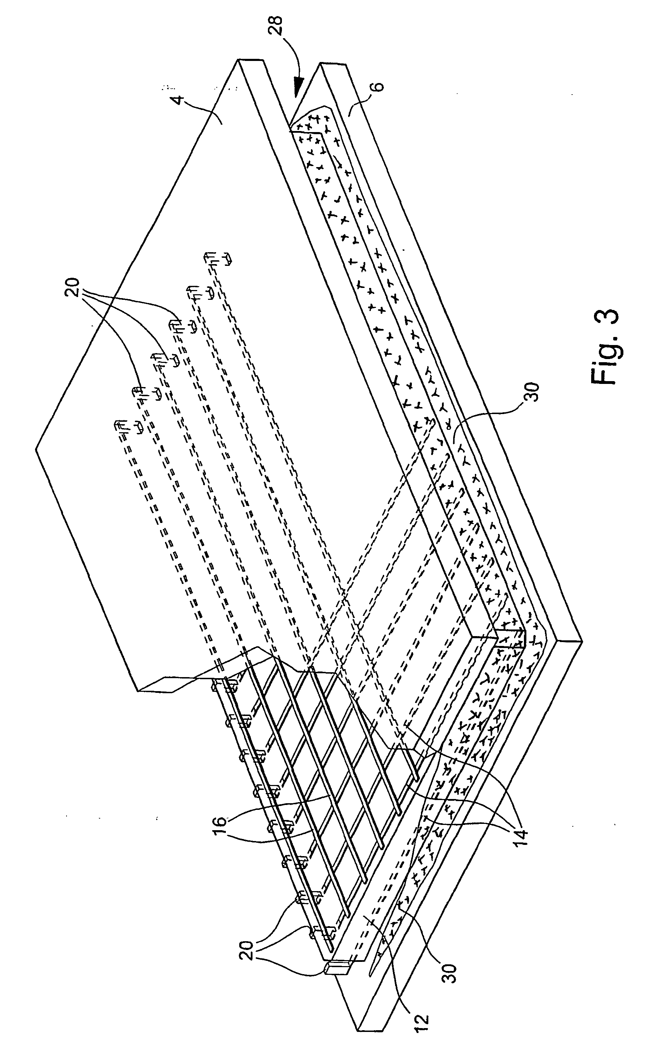

Les moyens de connexion 18 sont constitués par des plots de contact 20 (mieux visibles sur les figures 2 et 3) réalisés en une matière électriquement conductrice apportée sur le prolongement de chacune des électrodes 14 et 16 à l'endroit où celles-ci émergent de la cloison 12. Grâce à ces plots de contact 20, il est possible d'augmenter la surface de la zone latérale de contact électrique par laquelle chaque électrode 14 ou 16 est reliée au circuit électronique de commande. La liaison électrique entre les électrodes 14 et 16 et le circuit de commande est ainsi beaucoup plus fiable.

Conformément à une caractéristique de l'invention, les plots de contact 20 sont moins hauts que l'espace séparant les deux substrats 4 et 6 et qui est déterminé par la hauteur du cadre de scellement qui lie ces deux substrats ensemble.

Dans l'exemple représenté à la figure 1, on voit que la cloison étanche 10 suit un contour extérieur entre les deux substrats de verre superposés 4 et 6, tandis que la cloison 12 suit le contour intérieur de la cellule à cristaux liquides 2, de sorte que la cloison extérieure 10 entoure la cloison intérieure 12. Ainsi, ces cloisons 10 et 12 qui se présentent sous la forme de parois sensiblement verticales s'étendant parallèlement et à distance l'une de l'autre sont en contact direct pour l'une 10, avec l'atmosphère extérieure, et pour l'autre 12 avec le cristal liquide. Elles forment avantageusement un canal de remplissage 22 qui peut être vu sur la figure 1 et mieux encore sur la figure 2, ce canal 22 étant destiné à être rempli avec une matière de scellement pour former le cadre de scellement de la cellule 2. A cet effet, au moins un trou 24 pour l'amenée de la matière de scellement est pratiqué dans le substrat avant 4 et communique avec le canal de remplissage 22, tandis qu'un trou 26 pour le remplissage de la cavité 8 avec du cristal liquide est également percé dans ledit substrat avant 4. Le canal de remplissage 22 pouvant être d'une grande longueur en fonction de la géométrie de la cellule 2, il pourra être séparé en deux ou plusieurs canaux isolés les uns des autres par des éléments de cloison et remplis chacun via un trou de remplissage 24 correspondant. Bien entendu, selon une variante, on pourrait également pratiquer au moins un trou de remplissage dans la cloison extérieure 10.

On comprendra, bien entendu, que la paroi 10 peut être omise, seule la paroi 12 qui est en contact pas sa face latérale interne avec le cristal liquide étant conservée. Dans ce cas, après structuration de ladite paroi 12 et positionnement du substrat supérieur 4 sur le substrat inférieur 6, on introduira la matière de scellement dans l'interstice 28 défini par la face latérale externe de la cloison 12 et les deux substrats superposés 4 et 6 jusqu'à ce qu'au moins une partie du volume de cet interstice 28 soit occupée par ladite matière de scellement comme représenté à la figure 3.

Cette opération peut être réalisée au moyen d'un distributeur de matière de scellement mieux connu sous sa dénomination anglo-saxonne "dispenser". Le distributeur sera déplacé le long d'au moins une partie du pourtour des deux substrats 4 et 6, de façon à former un cordon de matière de scellement 30 qui, s'appuyant contre la face latérale externe de la cloison 12 et réunissant lesdits deux substrats 4 et 6, constituera le cadre de scellement. Il n'est pas nécessaire que le cordon de matière de scellement 30 s'étende jusqu'aux bords de la cellule. Il suffit seulement qu'il soit suffisamment large pour jouer le rôle d'un cadre de scellement, c'est-à-dire isoler la matière sensible de l'environnement extérieur, empêcher de même celle-ci de fuir vers l'extérieur de la cellule et maintenir ensemble les deux substrats 4 et 6.

Pour déposer le cordon de matière de scellement 26, on peut également tremper l'un des bords de la cellule 2 délimitée par les deux substrats 4 et 6 superposés dans un récipient contenant une certaine quantité de cette matière de scellement. Par capillarité, la matière de scellement va venir progressivement combler le volume vacant 28 situé à l'extérieur du périmètre de la cloison 12. Une autre possibilité encore consiste à injecter la matière de scellement entre les deux substrats 4 et 6 via un trou de remplissage percé dans l'un desdits substrats 4 ou 6 à l'extérieur du périmètre de la cloison 12.

Conformément à l'invention, après avoir déposé sur la face interne de l'un des deux substrats 4 ou 6 toutes les structures nécessaires au bon fonctionnement de la cellule 2 à venir telles que, par exemple, les électrodes ou bien encore les plots de contact (ces étapes de fabrication seront décrites en détail ultérieurement), on recouvre ce substrat d'une couche de matériau photorésist. Cette couche de photorésist est ensuite structurée par des techniques de photogravure classiques pour lui donner la forme du canal de remplissage 22 susmentionné délimité par les cloisons 10 et 12. Une fois obtenu le canal de remplissage 22, le substrat restant, également convenablement apprêté, est réuni avec le premier substrat. Bien entendu, l'ordre de ces opérations est donné à titre purement illustratif seulement, et pourrait être modifié dans la mesure où la matière de scellement est introduite après réunion des substrats.

Selon une variante du procédé, la couche de photorésist est structurée de façon à former, non seulement le canal de remplissage, mais également des espaceurs (non représentés au dessin pour des raisons de clarté) destinés à maintenir un espacement constant entre les deux substrats 4 et 6. Grâce à la présente invention, il est donc possible de structurer en une seule étape de fabrication les structures d'espacement et le canal de remplissage. Outre les gains en temps et en argent qu'un tel procédé permet de réaliser, un autre avantage de cette variante de mise en oeuvre du procédé selon l'invention réside dans le fait que, comme les espaceurs et le cadre de scellement sont réalisés de manière concomitante, lesdits espaceurs ne risquent plus d'être endommagés lors d'une étape ultérieure de fabrication du cadre de scellement comme tel était le cas dans l'art antérieur. Enfin, le canal de remplissage et les espaceurs sont réalisés au moyen du même matériau, ce qui simplifie encore davantage le présent procédé.

Les techniques de photolithographie utilisées dans le cadre de la présente invention sont de type conventionnel et bien connues de l'homme du métier. Elles consistent, pour l'essentiel, à sensibiliser la couche de photorésist au moyen d'une lumière passant par les zones transparentes d'un écran reproduisant les formes des zones à sensibiliser. Quant au matériau photorésist, il s'agit également, de manière très classique, d'une résine photosensible que l'homme du métier pourra sélectionner sans peine, et dont le but habituel est de protéger la surface de la couche à graver de l'action d'un réactif chimique aux endroits où cette résine subsiste après sensibilisation par le rayonnement optique et élimination chimique des zones recouvrant les endroits à graver. On peut citer comme matériaux bien adaptés pour réaliser les cloisons 10 et 12 le cyclotène photosensible de chez Dow Chemical et le produit commercialisé sous la référence SU8 par MicroChem Corp.

Comme cela a été décrit ci-dessus, après structuration des cloisons étanches 10 et 12 délimitant le canal de remplissage 22 et, le cas échéant, des espaceurs, les deux substrats 4 et 6 sont réunis. On peut alors procéder au remplissage dudit canal 22. Pour ce faire, on commence à faire le vide dans l'enceinte de travail dans laquelle est réalisée la cellule 2. Une fois le vide établi, on dépose une goutte de matière de scellement au-dessus du trou 24 qui communique avec le canal de remplissage 22. Par capillarité, la matière de scellement commence à s'écouler dans le canal 22. Puis on rétablit la pression atmosphérique dans l'enceinte de travail. Sous l'effet de la différence de pression entre le canal de remplissage dans lequel règne un vide assez poussé et la pression atmosphérique, la matière de scellement est chassée jusqu'au fond du canal de remplissage.

Typiquement, la matière utilisée pour sceller la cellule 2 est une résine photosensible qui est introduite à l'état liquide dans le canal de remplissage 22 et qui est ensuite polymérisée par sensibilisation à l'aide d'une lumière ultraviolette à travers le substrat supérieur 4. La matière de scellement doit assurer une fermeture hermétique des bords de la cellule 2 afin de confiner efficacement le cristal liquide et le protéger des phénomènes de diffusion de gaz de l'atmosphère ambiante. La matière de scellement doit également présenter un pouvoir adhésif afin de permettre de maintenir les deux substrats 4 et 6 ensemble. A titre de variante, la matière de scellement peut également être constituée par une résine qui polymérisera sous l'effet d'une élévation de la température dans l'enceinte de travail. On peut également utiliser comme matière de scellement une colle bicomposant dont les composants durcissent avec le temps ou sous l'effet d'une augmentation de température lorsqu'ils sont mis en présence l'un de l'autre. On peut citer comme matériaux bien adaptés pour réaliser le cadre de scellement selon l'invention les produits Loctite 3492 et Norland Optical Adhesives 61. Une autre famille de colles bien adaptée aux besoins de la présente invention est constituée par les colles cyanoacrylates. Enfin, les résines thermoplastiques peuvent également être utilisées dans le cadre de l'invention.

Une fois la matière de scellement introduite dans le canal de remplissage 22 puis solidifiée, on peut introduire le cristal liquide dans la cellule 2 via le trou de remplissage 26. Avantageusement, l'introduction de la matière de scellement, sa solidification, puis l'étape d'introduction du cristal liquide peuvent être effectuées à la suite les unes des autres ou simultanément dans la même machine. Finalement, le trou de remplissage 26 des cristaux liquides est obturé ainsi que l'espace 32 situé à proximité immédiate du trou de remplissage 26, afin de réaliser une continuité de scellement avec les parties de la cloison 12 les plus proches de manière que le scellement soit parfaitement réalisé sur tout le pourtour de la cellule 2. Enfin, des couches supplémentaires telles que des polariseurs peuvent encore être déposées sur les substrats 4 et 6.

Les électrodes 14 et 16 sont habituellement réalisées par photogravure sous la forme de couches minces d'un oxyde transparent conducteur tel qu'un mélange d'oxyde d'indium/étain mieux connu sous sa dénomination anglo-saxonne "Indium Tin Oxyde" ou "ITO". Après l'étape de structuration des électrodes 14, 16 intervient l'étape de réalisation des plots de contact 20. Bien entendu, selon une variante, il serait également possible de déposer tout d'abord une couche de matériau conducteur, puis de réaliser les plots de contact à la surface de cette couche, et enfin de structurer la couche conductrice afin de former les électrodes.

Les plots de contact 20 sont préférentiellement mais non limitativement réalisés par croissance galvanique au moyen d'un matériau conducteur tel que de l'or. A cet effet, on dépose par évaporation une couche d'or sur toute la surface des deux substrats 4 et 6. Préalablement au dépôt de la couche d'or, on pourra évaporer sur la surface des substrats 4 et 6, par exemple une couche de chrome, qui permet un meilleur accrochage de ladite couche d'or à la surface desdits substrats 4 et 6. La couche d'or est couramment appelée couche de croissance ou "seed layer" en terminologie anglo-saxonne du procédé de croissance galvanique.

Après évaporation de la couche d'or, on procède au dépôt d'une couche d'un agent photorésist dans laquelle sont pratiquées des ouvertures aux endroits où l'on désire que se produise le phénomène de croissance galvanique, autrement dit en bout des électrodes 14 et 16. La couche de croissance va être contactée électriquement pour constituer la cathode, puis les substrats 4, 6 vont être immergés dans un bain de croissance galvanique en regard d'une pièce de platine qui joue le rôle d'anode. Le bain est une base de cyanure double d'or et de potassium commercialisée sous le nom commercial AURALL 292 par la société Lea Ronal. Sous l'effet de l'application d'une tension électrique, le couple électrochimique présent en solution dans le bain de croissance galvanique va se dissocier et l'or va venir se déposer sur les endroits des substrats 4 et 6 non protégés par la couche de photorésist. En fonction de la valeur de la tension électrique et du temps durant lequel cette tension est appliquée, on peut contrôler la vitesse de croissance des plots de contact 20. Lorsque ces plots de contact 20 ont atteint les dimensions requises, on coupe la tension électrique. Il ne reste plus alors qu'à tremper les substrats 4 et 6 dans des bains d'attaque chimique pour éliminer successivement les couches de photorésist, d'or et de chrome. Lors de l'élimination de la couche d'or, les plots de contact 20 seront également légèrement attaqués et leur hauteur diminuera d'une valeur voisine de celle de l'épaisseur de la couche d'or initialement déposée sur les substrats 4 et 6. Il est à noter que ces différentes attaques chimiques sont sans effet sur les électrodes 14, 16 réalisées en ITO.

Selon une variante, les plots de contact 20 peuvent être réalisés à l'aide d'une technique de dépôt sélectif par impression telle que la sérigraphie au moyen d'une matière adhésive comme de l'époxy chargée de particules conductrices.

Après structuration des plots de contact 20, on dépose sur les électrodes 14, 16 des couches d'alignement des molécules de cristal liquide. Ces couches d'alignement peuvent être déposées par exemple par flexographie.

Après dépôt des couches d'alignement, les trous 24 et 26 pour l'introduction de la matière de scellement et du cristal liquide sont percés dans l'un des substrats, ici le substrat avant 4.

On procède ensuite à la structuration de la ou des cloisons 10 et 12 selon le mode opératoire décrit en détail ci-avant. En même temps que les cloisons 10 et 12, on peut, le cas échéant, réaliser simultanément les structures d'espacement, par exemple sous forme de barres rectilignes ou de plots.

Les cloisons 10 et/ou 12 étant structurées, on peut maintenant appliquer le substrat avant 4 sur le substrat arrière 6 et commencer à remplir le canal de remplissage 22. Si seule la cloison intérieure 12 a été réalisée, on peut remplir l'interstice 28 défini par la face latérale externe de cette cloison 12 et les deux substrats superposés 4 et 6, par exemple en trempant l'un des bords de la cellule 2 dans un récipient contenant de la matière de scellement liquide. Par capillarité, la matière de scellement va venir progressivement combler l'interstice 28 et enrober les plots de contact 20 sans risque aucun de les détériorer. Si, par contre, on a structuré à la fois la cloison intérieure 12 et la cloison extérieure 10 de façon à former ainsi le canal de remplissage 22 susmentionné, on introduira la matière de scellement dans ce canal 22 via le trou de remplissage 24 ménagé à cet effet dans le substrat avant 4.

Une fois la matière de scellement solidifiée et les deux substrats 4 et 6 réunis de façon permanente, on peut remplir la cavité 8 avec le cristal liquide via le trou de remplissage 26 percé dans le substrat supérieur 4 puis, lorsque le remplissage est terminé, on scelle ledit trou de remplissage 26 au moyen d'un bouchon de colle, toutes ces opérations pouvant être effectuées simultanément dans une même machine.

A ce stade du procédé de fabrication, on procède à la découpe de la cellule 2, par exemple par sciage ou découpage au jet d'eau, opération qui peut être suivie par une étape de meulage pour ramener les dimensions de la cellule 2 à ses cotes définitives. Le trait de scie est représenté en pointillé sur la figure 1. On remarquera que, dans l'exemple représenté au dessin, il passe à travers les plots de contact 20 de façon à ce que la cellule présente un contour régulier avec des plages de contact latéral matérialisées par lesdits plots 20 présentant une grande surface active. On peut alors évaporer sur la tranche de la cellule 2 à travers les ouvertures d'un masque des pistes conductrices 34 qui serviront à relier les plots de contact 20, autrement dit les électrodes 14 et 16, aux bornes d'entrée d'un circuit électronique de commande (non représenté) par exemple au moyen de fils conducteurs (également non représentés) qui permettront de prendre aisément le contact sur la tranche de ladite cellule 2.

L'invention s'applique pour fabriquer une cellule comprenant plus de deux substrats, par exemple quatre, les substrats étant réunis deux à deux par un cadre de scellement et constitué d'au moins une paroi qui délimite le volume pour le confinement de la matière sensible ou du fluide ainsi que d'un cordon de matière de scellement qui comble l'interstice entre les deux substrats considérés, des plots de matière conductrice étant apportés sur le prolongement de chaque électrode à l'endroit où celle-ci émerge de ladite cloison. De même, il serait tout à fait possible d'envisager que les plots de contact se trouvent situés à l'extérieur du périmètre délimité par le cordon de scellement.

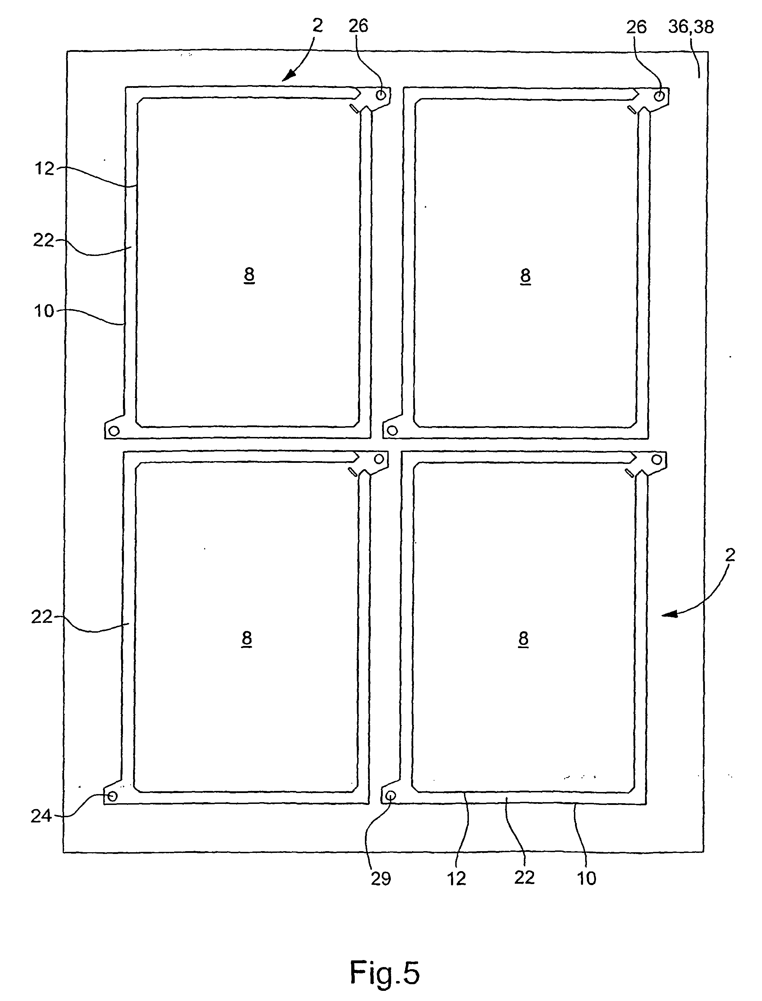

Il va de soi que l'invention n'est pas limitée aux modes de réalisation qui viennent d'être décrits, et que diverses modifications et variantes simples peuvent être envisagées sans sortir du cadre de la présente invention. En particulier, la présente invention s'applique de manière analogue à un procédé de fabrication en série de cellules comme représenté à la figure 5. Un tel lot de cellules 2 comporte deux plaques 36 et 38 communes à toutes les cellules 2 et un réseau de cloisons étanches 10 et 12 délimitant, pour chaque cellule 2, une cavité 8 destinée à renfermer les cristaux liquides de même que des canaux de remplissage qui sont destinés à être remplis avec une matière de scellement pour lier les deux plaques 36 et 38 et former les cadres de scellement. Avantageusement, une première pluralité de trous 26 pour le remplissage des cavités 8 avec du cristal liquide, et une seconde pluralité de trous 24 pour l'amenée de la matière de scellement sont pratiqués dans la plaque supérieure 36. Grâce à cette caractéristique, il est possible de remplir les canaux de remplissage, non pas par le côté, par exemple de cellules à cristaux liquides, mais par le dessus de ces dernières. On peut donc travailler avec un lot complet de cellules, sans être obligé de diviser ce lot en bandes pour pouvoir avoir accès aux trous de remplissage qui sont habituellement ménagés sur un des côtés des cellules. Les cellules 2 peuvent donc être pratiquement terminées en lot avant découpage. On peut notamment effectuer le remplissage et le scellement des trous d'amenée 24 de la matière de scellement destinée à former les cadres de scellement des cellules sur le lot entier, donc d'une façon plus simple et plus économique que sur des cellules individuelles. De même, les cellules 2 peuvent être remplies de cristal liquide et les trous de remplissage 26 obturés alors que les cellules sont encore en lot.

## Revendications

1. Procédé de fabrication d'une cellule électro-optique, en particulier une cellule à cristaux liquides (2), ou une cellule photovoltaïque électrochimique comprenant :
- au moins un premier substrat avant (4) transparent dont la surface supérieure constitue la face avant de la cellule (2);
- au moins un second substrat arrière (6) qui peut être également transparent ou non et dont la surface inférieure constitue la face arrière de ladite cellule (2);
- les substrats (4, 6) étant réunis par un cadre de scellement qui délimite un volume (8) pour le confinement d'une matière sensible dont les propriétés physiques, notamment optiques, ou électriques sont susceptibles de changer;
- les substrats (4, 6) comportant sur leurs faces en regard au moins une électrode (14, 16), ces électrodes (14, 16) étant destinées à être reliées à un circuit électrique d'alimentation ou de commande, et
- les électrodes (14, 16) de la cellule (2) se prolongeant sensiblement jusqu'aux bords de la cellule pour constituer des moyens de connexion (18) permettant d'établir la liaison électrique entre ladite cellule (2) et le circuit d'alimentation ou de commande,
en outre, ce procédé comprend les étapes consistant à :
- structurer sur chacun des substrats (4, 6) les électrodes (14, 16) correspondantes;
- structurer sur l'un des substrats (4, 6) au moins une cloison (12) qui délimite par sa face latérale interne le volume (8) pour le confinement de la matière sensible, cette cloison (12) s'étendant en retrait par rapport aux bords de la cellule, de façon à dégager les contacts de connexion (18), et étant donc traversée par les électrodes (14, 16);
- réunir le second substrat (4) avec le premier substrat (6);
- introduire une matière de scellement susceptible de s'écouler dans l'interstice (28) délimité par lesdits substrats (4, 6) réunis et la face latérale externe de la cloison (12) jusqu'à ce qu'au moins une partie de cet interstice soit occupée par la matière de scellement, et
- solidifier la matière de scellement afin que celle-ci forme le cadre de scellement de la cellule (2) ainsi obtenue.

2. Procédé selon la revendication 1, **caractérisé en ce qu'**il comprend en outre l'étape consistant à déposer sur chaque électrode (14, 16), dans la région où ces électrodes affleureront les bords de la cellule, un plot de contact (20) réalisé en une matière électriquement conductrice et à couper la cellule (2) de telle sorte qu'elle présenté une tranche sensiblement plane avec des plages de contact latéral présentant une surface active augmentée.

3. Procédé selon l'une quelconque des revendications 1 ou 2, **caractérisé en ce que** l'on fait pénétrer la matière de scellement dans l'interstice (28) par capillarité.

4. Procédé selon la revendication 1, **caractérisé en ce que** :
- lors de l'étape consistant à structurer une cloison sur l'un des substrats, une seconde cloison (10) est structurée, délimitant ainsi au moins un canal de remplissage (22) formé par les deux cloisons (10, 12) qui s'étendent à distance l'une de l'autre;
- lors de l'introduction de la matière de scellement, l'interstice est limité par ledit canal de sorte que ladite matière de scellement s'écoule dans le canal de remplissage (22) jusqu'à ce que tout le volume dudit canal de remplissage (22) soit occupé;
- ramener la cellule à ses cotes définitives en coupant à travers l'épaisseur du cadre de scellement.

5. Procédé selon la revendication 4, **caractérisé en ce qu'**il comprend en outre l'étape consistant à déposer sur chaque électrode (14, 16), dans la région où ces électrodes affleureront les bords de la cellule, un plot de contact (20) réalisé en une matière électriquement conductrice et à couper la cellule (2) de telle sorte qu'elle présente une tranche sensiblement plane avec des plages de contact latéral présentant une surface active augmentée.

6. Procédé selon l'une quelconque des revendications 4 ou 5, **caractérisé en ce que** l'on réalise un lot de cellules (2) comportant deux plaques (36, 38) communes à toutes les cellules et un réseau de cloisons (10, 12) délimitant, pour chaque cellule, un volume (8) pour le confinement de la matière sensible de même que des canaux de remplissage (22) qui sont destinés à être remplis avec une matière de scellement pour lier les deux plaques (36, 38) et former les cadres de scellement desdites cellules.

7. Procédé selon la revendication 6, **caractérisé en ce qu'**une première pluralité de trous (26) pour le remplissage des volumes (8) avec la matière sensible, et une seconde pluralité de trous (24) pour l'amenée de la matière de scellement sont pratiqués dans l'une des plaques (36) ou (38).

8. Procédé selon l'une quelconque des revendications 4 à 7, **caractérisé en ce que** l'on fait pénétrer la matière de scellement dans le canal de remplissage (22) par capillarité.

9. Procédé selon la revendication 8, **caractérisé en ce qu'**il comprend les étapes consistant à :
- faire le vide dans le canal de remplissage (22);
- faire pénétrer la matière de scellement dans ledit canal de remplissage (22), et
- rétablir la pression à l'extérieur de la cellule (2) de sorte que, sous l'effet de la différence de pression entre le canal de remplissage (22) dans lequel règne le vide et la pression environnante, la matière de scellement est chassée jusqu'au fond du canal de remplissage.

10. Procédé selon l'une quelconque des revendications 1 à 9, **caractérisé en ce que** l'on dépose sur l'un des substrats (6) une couche d'un matériau photorésist que l'on va ensuite structurer par des techniques de photogravure pour lui donner la forme d'une ou de plusieurs cloisons (10, 12).

11. Procédé selon la revendication 10, **caractérisé en ce que** la couche de photorésist est structurée de façon à former, non seulement la ou les cloisons (10, 12), mais également des structures d'espacement destinées à maintenir un écartement constant entre les deux substrats (4, 6) de la cellule (2).

12. Procédé selon l'une quelconque des revendications 1 à 11, **caractérisé en ce que** la matière de scellement est choisie dans le groupe formé par les résines pouvant être polymérisées par sensibilisation à l'aide d'une lumière ou par chauffage en élevant la température du milieu ambiant, par les résines thermoplastiques, par les colles cyanoacrylates et par les colles bicomposants dont les composants durcissent avec le temps ou sous l'effet d'une augmentation de température lorsqu'ils sont mis en présence l'un de l'autre.

13. Procédé selon l'une quelconque des revendications 2, 3, 5 à 12 **caractérisé en ce que** les plots de contact (20) sont formés par croissance galvanique.

14. Procédé selon la revendication 13, **caractérisé en ce que** les plots de contact (20) sont réalisés en or.

15. Procédé selon l'une quelconque des revendications 2,3,5 à 12 **caractérisé en ce que** les plots de contact sont réalisés par impression sélective.

16. Procédé selon la revendication 15, **caractérisé en ce que** l'on emploie une résine chargée de particules conductrices pour réaliser les plots de contact.

17. Procédé selon la revendication 16, **caractérisé en ce que** la résine est une colle époxy.

## Patentansprüche

1. Verfahren zum Herstellen einer elektrooptischen Zelle, insbesondere einer Flüssigkristallzelle (2), oder einer elektrochemischen photovoltaischen Zelle, die umfasst:
- wenigstens ein lichtdurchlässiges erstes, vorderes Substrat (4), dessen obere Oberfläche die vordere Fläche der Zelle (2) bildet;
- wenigstens ein zweites, hinteres Substrat (6), das ebenfalls lichtdurchlässig oder nicht lichtdurchlässig sein kann und dessen untere Oberfläche die hintere Fläche der Zelle (2) bildet;
- wobei die Substrate (4, 6) durch einen Einkapselungsrahmen verbunden sind, der ein Volumen (8) für die Einkapselung eines empfindlichen Materials begrenzt, dessen physikalische, vor allem dessen optische oder elektrische Eigenschaften verändert werden können;
- wobei die Substrate (4, 6) auf ihren einander zugewandten Flächen wenigstens eine Elektrode (14, 16) aufweisen, wobei diese Elektroden (14, 16) dazu bestimmt sind, mit einer elektrischen Versorgungs- oder Steuerschaltung verbunden zu werden, und
- wobei die Elektroden (14, 16) der Zelle (2) im Wesentlichen bis zu den Rändern der Zelle verlängert sind, um Anschlussmittel (18) zu bilden, die ermöglichen, die elektrische Verbindung zwischen der Zelle (2) und der Versorgungs- oder Steuerschaltung herzustellen,
wobei darüber hinaus dieses Verfahren die Schritte erfasst, die darin bestehen:
- auf jedem der Substrate (4, 6) die entsprechenden Elektroden (14, 16) zu strukturieren;
- auf einem der Substrate (4, 6) wenigstens eine Trennwand (12) zu strukturieren, die mit ihrer inneren Seitenfläche das Volumen (8) für die Einkapselung des empfindlichen Materials begrenzt, wobei diese Trennwand (12) in Bezug auf die Ränder der Zelle zurückversetzt verläuft, derart, dass sie die Anschlusskontakte (18) unterbricht, und somit von den Elektroden (14, 16) durchquert wird;
- das zweite Substrat (4) mit dem ersten Substrat (6) zu vereinigen;
- ein Einkapselungsmaterial einzuleiten, das in den Freiraum (28) fließen kann, der durch die vereinigten Substrate (4, 6) und die äußere Seitenfläche der Trennwand (12) begrenzt ist, bis wenigstens ein Teil dieses Freiraums von dem Einkapselungsmaterial belegt ist, und
- das Einkapselungsmaterial zu verfestigen, damit dieses den Einkapselungsrahmen der auf diese Weise erhaltenen Zelle (2) bildet.

2. Verfahren nach Anspruch 1, **dadurch gekennzeichnet, dass** es außerdem den Schritt umfasst, der darin besteht, auf jeder Elektrode (14, 16) in dem Bereich, in dem diese Elektroden mit den Rändern der Zelle bündig sind, eine Kontaktanschlussfläche (20) abzulagern, die aus einem elektrisch leitenden Material hergestellt ist, und die Zelle (2) in der Weise durchzuschneiden, dass sie eine im Wesentlichen ebene Schnittfläche mit den seitlichen Kontaktbereichen aufweist, die eine erhöhte aktive Oberfläche bilden.

3. Verfahren nach einem der Ansprüche 1 oder 2, **dadurch gekennzeichnet, dass** das Eindringen des Einkapselungsmaterials in den Freiraum (28) durch Kapillarität bewerkstelligt wird.

4. Verfahren nach Anspruch 1, **dadurch gekennzeichnet, dass**:
- in dem Schritt, der darin besteht, in einem der Substrate eine Trennwand zu strukturieren, eine zweite Trennwand (10) strukturiert wird, die **dadurch** wenigstens einen Befüllungskanal (22) begrenzt, der durch die zwei Trennwände (10, 12) gebildet wird, die sich in einem gegenseitigen Abstand erstrecken;
- beim Einleiten des Einkapselungsmaterials der Freiraum durch den Kanal begrenzt ist, derart, dass das Einkapselungsmaterial in den Befüllungskanal (22) fließt, bis das gesamte Volumen des Befüllungskanals (22) belegt ist;
- die Zelle auf ihre endgültigen Maße gebracht wird, indem durch die Dicke des Einkapselungsrahmens geschnitten wird.

5. Verfahren nach Anspruch 4, **dadurch gekennzeichnet, dass** es außerdem den Schritt umfasst, der darin besteht, auf jeder Elektrode (14, 16) in dem Bereich, in dem diese Elektroden mit den Rändern der Zelle bündig sind, eine Kontaktanschlussfläche (20) abzulagern, die aus einem elektrisch leitenden Material verwirklicht ist, und die Zelle (2) in der Weise durchzuschneiden, dass sie eine im Wesentlichen ebene Schnittfläche mit den seitlichen Kontaktbereichen, die eine erhöhte aktive Oberfläche aufweisen, aufweist.

6. Verfahren nach einem der Ansprüche 4 oder 5, **dadurch gekennzeichnet, dass** ein Los von Zellen (2) hergestellt wird, die zwei mit allen Zellen gemeinsame Platten (36, 38) und ein Netz von Trennwänden (10, 12), die für jede Zelle ein Volumen (8) für die Einkapselung des empfindlichen Materials begrenzen, sowie Befüllungskanäle (22), die dazu bestimmt sind, mit einem Einkapselungsmaterial befüllt zu werden, um die zwei Platten (36, 38) zu verbinden und um die Einkapselungsrahmen der Zellen zu bilden, umfassen.

7. Verfahren nach Anspruch 6, **dadurch gekennzeichnet, dass** in einer der Platten (36) oder (38) eine erste Mehrzahl von Löchern (26) für die Befüllung der Volumina (8) mit dem empfindlichen Material und eine zweite Mehrzahl von Löchern (24) für die Zuführung des Einkapselungsmaterials ausgebildet sind.

8. Verfahren nach einem der Ansprüche 4 bis 7, **dadurch gekennzeichnet, dass** das Eindringen des Einkapselungsmaterials in den Befüllungskanal (22) durch Kapillarität bewerkstelligt wird.

9. Verfahren nach Anspruch 8, **dadurch gekennzeichnet, dass** es die Schritte umfasst, die darin bestehen:
- im Befüllungskanal (22) ein Vakuum zu erzeugen;
- das Einkapselungsmaterial in den Befüllungskanal (22) eindringen zu lassen, und
- den Druck außerhalb der Zelle (2) wiederherzustellen, derart, dass unter der Wirkung der Druckdifferenz zwischen dem Befüllungskanal (22), in dem das Vakuum herrscht, und dem Umgebungsdruck das Einkapselungsmaterial bis zum Boden des Befüllungskanals gedrängt wird.

10. Verfahren nach einem der Ansprüche 1 bis 9, **dadurch gekennzeichnet, dass** auf einem der Substrate (6) eine Schicht aus einem Photoresist-Material abgelagert wird, die anschließend durch Photoätztechniken strukturiert wird, um ihr die Form einer oder mehrerer Trennwände (10, 12) zu verleihen.

11. Verfahren nach Anspruch 10, **dadurch gekennzeichnet, dass** die Photoresistschicht in der Weise strukturiert wird, dass nicht nur eine oder mehrere Trennwände (10, 12), sondern außerdem Abstandsstrukturen, die dazu vorgesehen sind, zwischen den zwei Substraten (4, 6) der Zelle (2) einen konstanten Abstand aufrechtzuerhalten, gebildet werden.

12. Verfahren nach einem der Ansprüche 1 bis 11, **dadurch gekennzeichnet dass** das Einkapselungsmaterial aus der Gruppe gewählt wird, die gebildet ist durch Harze, die durch Sensibilisierung mit Hilfe von Licht oder durch Erwärmen mittels Erhöhung der Temperatur des umgebenden Milieus polymerisiert werden können, durch thermoplatische Harze, durch Cyanoacrylat-Klebstoffe und durch Zweikomponenten-Klebstoffe, deren Komponenten mit der Zeit oder unter der Wirkung einer Temperaturerhöhung härten, wenn sie zusammengebracht werden.

13. Verfahren nach einem der Ansprüche 2, 3, 5 bis 12 **dadurch gekennzeichnet, dass** die Kontaktanschlussflächen (20) durch galvanisches Wachstum gebildet werden.

14. Verfahren nach Anspruch 13, **dadurch gekennzeichnet, dass** die Kontaktanschlussflächen (20) aus Gold hergestellt sind.

15. Verfahren nach einem der Ansprüche 2, 3, 5 bis 12 **dadurch gekennzeichnet, dass** die Kontaktanschlussflächen durch selektives Bedrucken verwirklicht werden.

16. Verfahren nach Anspruch 15, **dadurch gekennzeichnet, dass** ein Harz, das mit leitenden Partikeln angereichert ist, verwendet wird, um die Kontaktanschlussflächen herzustellen.

17. Verfahren nach Anspruch 16, **dadurch gekennzeichnet, dass** das Harz ein Epoxidklebstoff ist.

## Claims

1. Method of manufacturing an electro-optical cell, in particular a liquid crystal cell (2), or an electrochemical photovoltaic cell including:
- at least a first transparent front substrate (4) whose top surface forms the front face of the cell (2);
- at least a second back substrate (6) which may or may not be transparent and whose bottom surface forms the back face of said cell (2);
- the substrates (4, 6) being joined by a sealing frame which defines a volume (8) for retaining sensitive material whose physical properties, particularly optical, or electrical properties are capable of changing,
- the substrates (4, 6) including on their faces that are opposite each other at least one electrode (14, 16), said electrodes (14, 16) being intended to be connected to an electrical power or control circuit; and
- the electrodes (14, 16) of the cell (2) extending substantially as far as the edges of the cell to form connection means (18) in order to set up the electrical connection between said cell (2) and the power or control circuit,
said method further including the steps of:
- structuring the corresponding electrodes (14, 16) on each of the substrates (4, 6);
- structuring at least one wall (12) on one of the substrates (4, 6), which defines, via its inner lateral face, the volume (8) for retaining the sensitive material, said wall (12) extending in a set back position with respect to the edges of the cell, so as to free the connection contacts (18), and thus with the electrodes (14, 16) passing through it;
- joining the second substrate (4) to the first substrate (6);
- introducing a sealing material capable of flowing into the gap (28) defined by said joined substrates (4, 6) and the external lateral face of the wall (12) until at least a part of said gap is occupied by the sealing material; and
- solidifying the sealing material so that the latter forms the sealing frame of the cell (2) thereby obtained.

2. Method according to claim 1, **characterised in that** it further includes the step of depositing a contact bump (20) made of an electrically conductive material on each electrode (14, 16), in the region where the electrodes will be flush with the edges of the cell and of cutting the cell (2) such that it has a substantially flat edge with lateral contact zones having an increased active surface.

3. Method according to any one of claims 1 or 2, **characterized in that** the sealing material penetrates the gap (28) by capillary action.

4. Method according to claim 1, **characterised in that**:
- during the step consisting in structuring a wall on one of the substrates, a second wall (10) is structured, thus delimiting at least one filling channel (22) formed by the two walls (10, 12) which extend at a distance from each other;
- during the introduction of the sealing material, the gap is limited by said channel so that the sealing material flows into the filling channel (22) until all the volume of said filling channel (22) is occupied;
- reducing the cell at its final dimensions by cutting through the thickness of the sealing frame.

5. Method according to claim 4, **characterised in that** it further includes the step of depositing a contact bump (20) made of an electrically conductive material on each electrode (14, 16), in the region where the electrodes will be flush with the edges of the cell and of cutting the cell (2) such that it has a substantially flat edge with lateral contact zones having an increased active surface.

6. Method according to claim 5, **characterised in that** a batch of cells (2) is made including two plates (36, 38) common to all of the cells and a network of walls (10, 12) defining, for each cell, a volume (8) for retaining the sensitive material as well as filling channels (22), which are for filling with a sealing material in order to connect the two plates (36, 38) and form the sealing frames for said cells.

7. Method according to claim 6, **characterised in that** a first plurality of holes (26) for filling the volumes (8) with the sensitive material and a second plurality of holes (24) for supplying the sealing material are made in one of the plates (36) or (38).

8. Method according to any one of claims 4 to 7, **characterised in that** the sealing material penetrates the filling channel (22) by capillary action.

9. Method according to claim 8, **characterised in that** it includes the steps of:
- creating a vacuum in the filling channel (22);
- making the sealing material penetrate said filling channel (22), and
- re-establishing the pressure outside the cell (2) such that, via the effect of the pressure difference between the filling channel (22) in which the vacuum prevails and the environmental pressure, the sealing material is driven to the bottom of the filling channel.

10. Method according to any one of claims 1 to 9, **characterised in that** a layer of photoresist material is deposited on one of the substrates (6), said layer will then be structured by photo-etching techniques to give it the shape of one or several walls (10, 12).

11. Method according to claim 10, **characterised in that** the photoresist layer is structured so as to form, not only the wall or walls (10, 12), but also distance structures for maintaining a constant distance between the two substrates (4, 6) of the cell (2).

12. Method according to any one of claims 1 to 11, **characterised in that** the sealing material is chosen from the group formed by resins that can be polymerised by sensitisation using a light or by heating by raising the temperature of the ambient medium, by thermoplastic resins, by cyanoacrylate adhesives and by dual component adhesives whose components harden over time or via the effect of a temperature increase when they are placed in the presence of each other.

13. Method according to any one of claims 2, 3, 5 to 12 **characterised in that** the contact bumps (20) are formed by galvanic growth.

14. Method according to claim 13, **characterised in that** the contact bumps (20) are made of gold.

15. Method according to any one of claims 2, 3, 5 to 12 **characterised in that** the contact bumps are made by selective printing.

16. Method according to claim 15, **characterised in that** a resin charged with conductive particles is used to MAKE the contact bumps (20).

17. Method according to claim 16, **characterised in that** the resin is an epoxy adhesive.
